# EUROPÄISCHE PATENTSCHRIFT

(11) **EP 2 733 801 B1**
(45) Veröffentlichungstag und Bekanntmachung des Hinweises auf die Patenterteilung: **15.02.2017**
(21) Anmeldenummer: 13004611.3
(22) Anmeldetag: 21.09.2013
(51) Int. Cl.: H02B 1/21

(54) **Sicherungstrennschalter mit Schienenmodul**
Isolating switch with rail module
Sectionneur de sécurité doté d'un module de rail

(30) Priorität: 14.11.2012 PL 40160612
(43) Veröffentlichungstag der Anmeldung: 21.05.2014
(73) Patentinhaber: APATOR S.A., 87-100 Torun (PL)
(72) Erfinder: Szarzynski, Krzysztof, 88-320 Strzelno (PL); Luczak, Robert, 87-800 Wloclawek (PL); Geberle, Damian, 87-100 Torun (PL); Baran, Marcin, 95-080 Tuszyn (PL); Latka, Tomasz, 87-220 Radzyn Chelminski (PL)
(74) Vertreter: Bischof, Oliver

(56) Entgegenhaltungen:
- EP-A1- 1 505 701
- EP-A1- 2 026 429
- DE-A1- 10 215 500
- DE-C1- 19 714 839

## Beschreibung

Die Erfindung betrifft einen Sicherungstrennschalter, umfassend ein komplettes Unterteil mit einem daran aufgesetzten Gehäuse und einem kompletten Deckel, wobei das Unterteil ein Basisteil und einen Schienenmodul mit wenigstens einer Schienenklemme aufweist, die zur Montage an einer Schienenbrücke dient, wobei der Schienenmodul zwei elastische Arme hat, welche wiederum jeweils eine Stützfläche aufweisen, die sich an am Basisteil angeordneten Auflageteilen abstützt und den Schienenmodul an dem kompletten Unterteil fixiert.

Ein Sicherungstrennschalter der im Oberbegriff beschriebenen Art lässt sich der EP 1 505 701 A1 entnehmen. Der Sicherungstrennschalter, Installationsschaltgerät genannt, weist ein Zwischenteil zum Anordnen des Installationsschaltgerätes auf den Stromschienen eines Verteilers auf. Am Zwischenteil sind zwei durch einen manuell betätigbaren Hebel zurückdrückbare Halteteile angeordnet. Nachteilig ist, dass das Zwischenteil keine Drehmöglichkeiten des Schienenmoduls mit integrierten Schienenklemmen gewährleisten kann.

Aus der Gebrauchsmuster-Anmeldung DE 29615341 U1 ist ein Adapter für Stromschienen-Systeme mit einem Gehäuse bekannt, der elastische Kontaktelemente aufweist, die zum Anschließen an eine Schienenbrücke dienen.

Aus EP1271727 A1 ist ein Sicherungstrennschalter bekannt, der sich an einer Schienenbrücke mit nach unten oder nach oben gerichteten Stromabflüssen befestigen lässt. Der Trennschalter weist Hakenklemmen auf, die um ihre eigene Achse verdrehbar sind. Darüber hinaus weisen die Hakenklemmen zylindrisch ausgebildete Abschirmungen der Schienenklemmen auf. In einem Unterteil des Trennschalters sind zylindrische Führungen für die Abschirmungen der Klemmen vorgesehen. Zur Verdrehung der Hakenklemme ist es nicht notwendig, die Hakenklemme aus dem Trennschalter zu nehmen.

Es stellt sich die Aufgabe, einen vorgenannten Sicherungstrennschalter insbesondere in Bezug auf ein enthaltenes Schienenmodul zu verbessern.

Ein erfindungsgemäßer Sicherungstrennschalter der ein gangs genannten Art löst die Aufgabe dadurch, dass
- die Auflageteile vierte Stifte sind, welche an einem Anschlussteil des Basisteils angeordnet sind,
- der Schienenmodul vierte und sechste Gleitflächen aufweist, welche sich während des Verschiebens des Schienenmoduls in Richtung eines Oberteils des Basisteils an den vierten Stiften verlagern und die elastischen Armen biegen,
- das Herausnehmen und Drehen des Schienenmoduls gleichzeitig das Drehen aller Schienenklemmen bewirkt, wodurch es zur Änderung der Abflusscichtung kommt.

Der erste elastische Arm weist vierte Gleitflächen auf, die die ersten elastischen Arme des Schienenmoduls biegen, indem sie sich an den an einem Anschlussteil des Basisteils angeordneten vierten Stiften verlagern.

Der zweite elastische Arm weist fünfte Gleitflächen auf, die, indem sie sich an den an dem Anschlussteil des Basisteils angeordneten vierten Stiften verlagern, die die zweiten elastischen Arme des Schienenmoduls biegen.

Der Schienenmodul weist eine zweite Vertiefung auf, die beim Andrücken die ersten elastischen Arme biegt, wodurch sich die fünfte Stützfläche hinter die vierten Stifte verlagert und denSchienenmodul entsperrt und das Verschieben und Herausnehmen des Schienenmoduls aus dem kompletten Unterteil ermöglicht.

Darüber hinaus weist der Schienenmodul eine erste Vertiefung auf, die sich beim Andrücken die zweiten elastischen Arme verbiegt, wodurch sich die sechste Stützfläche hinter die vierten Stifte verlagert und den Schienenmodul entsperrt und das Verschieben und Herausnehmen des Schienenmoduls aus dem kompletten Unterteil ermöglicht.

Der Schienenmodul weist auch dritte Ausschnitte auf, die zusammen mit den in einem ersten Unterteil des Basisteils angeordneten, fünften Führungen das Hineinschieben von fünften Daumen eines Blockier-Maskierelements ermöglichen, welches den Schienenmodul vor dem Herausschieben aus dem kompletten Unterteil zusätzlich absichert.

Außerdem weist der Schienenmodul zweite Ausschnitte auf, die zusammen mit den in einem ersten Oberteil des Basisteils angeordneten, vierten Führungen das Hineinschieben der fünften Daumen des Blockier-Maskierelements ermöglichen, welches den Schienenmodul vor dem Herausschieben aus dem kompletten Unterteil zusätzlich absichert.

Ein Vorteil der Erfindung besteht darin, dass das Herausnehmen und Drehen des Schienenmoduls gleichzeitig das Drehen aller drei Schienenklemmen bewirkt, wodurch es zur Änderung der Abflussrichtung kommt. Darüber hinaus ist es vorteilhaft, dass trotz der Verwendung des erwähnten Schienenmoduls der Trennschalter nicht an Höhe gewinnt, was dadurch erreicht wird, dass die Kappen sich in speziell ausgebildeten Anschlusskammern verbergen.

Der Gegenstand der Erfindung ist anhand der beiliegenden Zeichnung näher erläutert, deren Figuren zeigen:
Fig. 1 - einen Sicherungstrennschalter in einer Parkposition, im Schnitt;
Fig. 2 - ein Detail A des Trennschalters gemäß Fig. 1;
Fig. 3 - einen kompletten Deckel in einer perspektivischen Ansicht;
Fig. 4 - das Auslöselement in einer anderen perspektivischen Seitenansicht;
Fig. 5 - ebenfalls das Auslöselement in einer anderen Seitenansicht;
Fig. 6 - ein Kopfteil in einer perspektivischen Ansicht von vorne;
Fig. 7 - das Kopfteil in einer perspektivischen Ansicht von vorne;
Fig. 8 - ein Detail B des Kopfteils gemäß Fig. 7;
Fig. 9 - ein Gehäuse in einer perspektivischen Ansicht;
Fig. 10 - ein Detail C des Gehäuses gemäß Fig. 9;
Fig. 11 - ein Detail D des Gehäuses gemäß Fig. 9;
Fig. 12 - einen Handgriff in einer perspektivischen Ansicht;

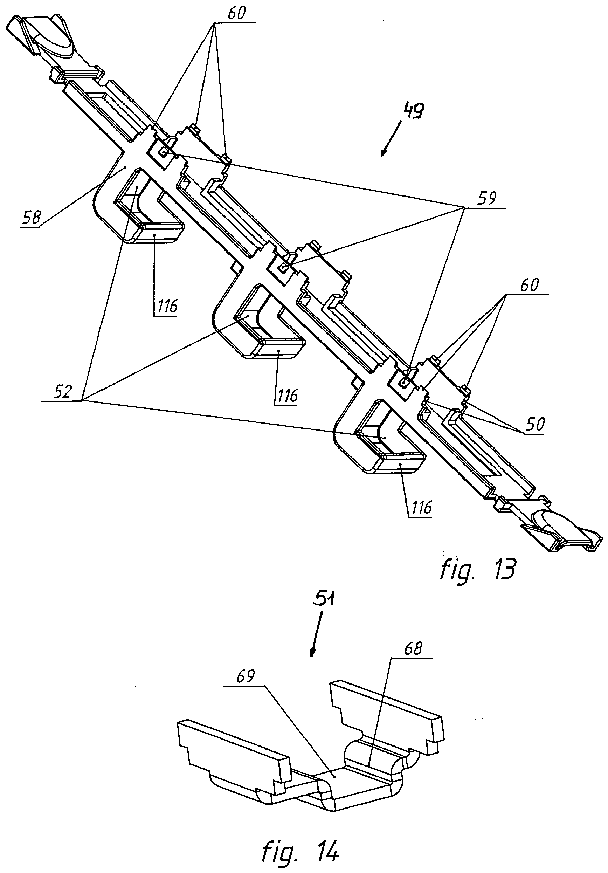

Fig. 13 - eine Schienenklemmen-Abschirmung in einer perspektivischen Ansicht;
Fig. 14 - eine Klemmunterlage in einer perspektivischen Ansicht,
Fig. 15 - die Klemmunterlage in einer perspektivischen Ansicht von unten;
Fig. 16 - eine erste Anschlussschiene in einer perspektivischen Ansicht;
Fig. 17 - eine zweite Anschlussschiene in einer perspektivischen Ansicht;
Fig. 18 - eine dritte Anschlussschiene in einer perspektivischen Ansicht;

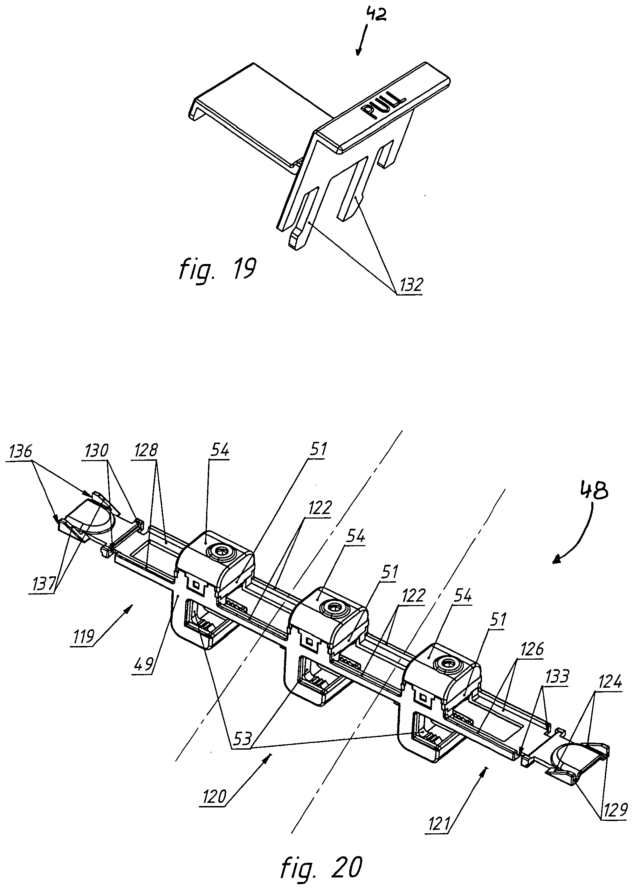

Fig. 19 - ein Blockier-Maskierelement in einer perspektivischen Ansicht;
Fig. 20 - ein Schienenmodul in einer perspektivischen Ansicht;

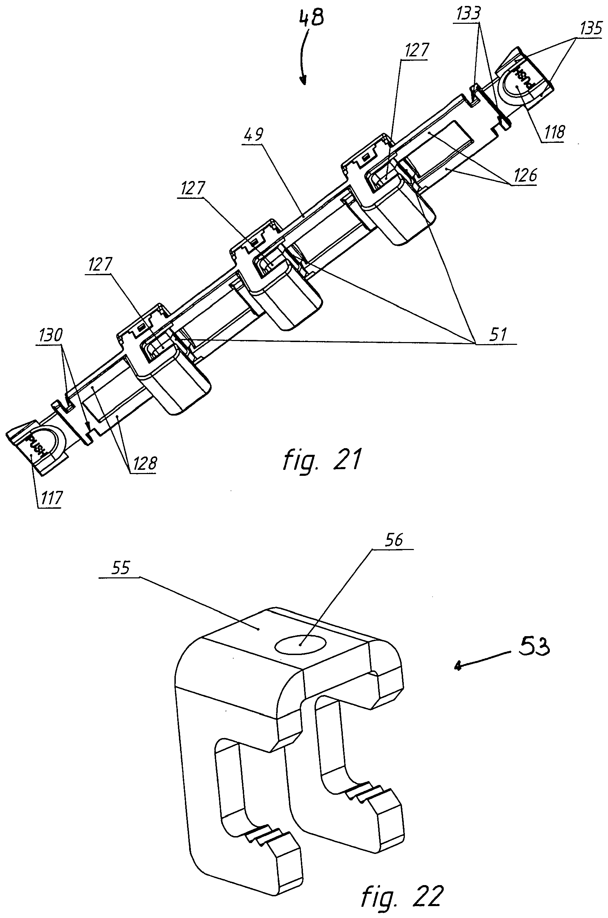

Fig. 21 - der Schienenmodul in einer perspektivischen Ansicht von unten;
Fig. 22 - eine Schienenklemme in einer perspektivischen Ansicht;
Fig. 23 - den Trennschalter mit einem herausgenommenen kompletten Deckel, in einer rechtwinkligen Parallelprojektion, im Schnitt;
Fig. 24 - ein Unterteil in einer perspektivischen Ansicht;
Fig. 25 - ebenfalls das Unterteil in einer perspektivischen Ansicht;

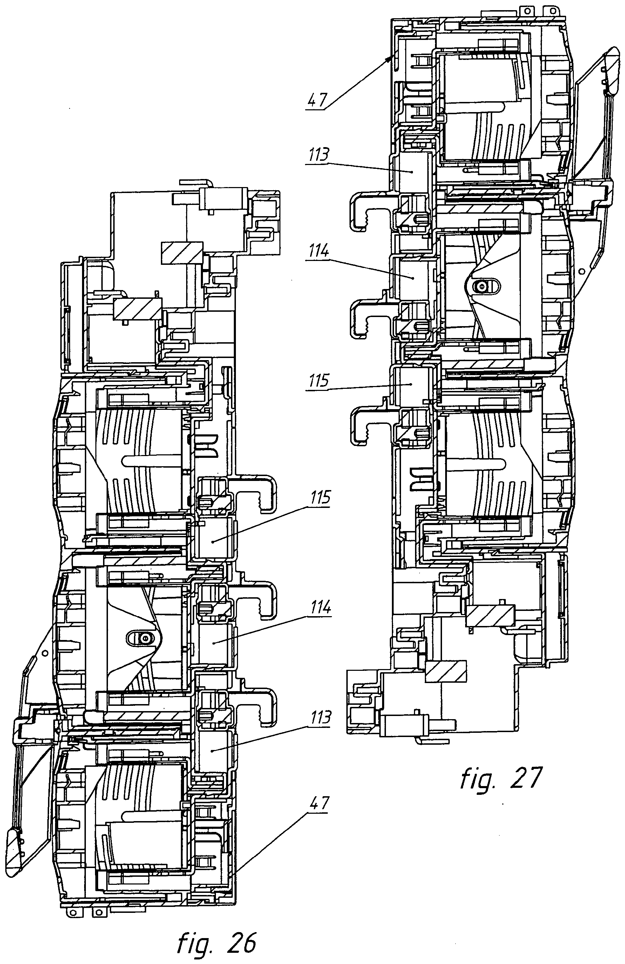

Fig. 26 - den Trennschalter in einer rechtwinkligen Parallelprojektion, im Schnitt;
Fig. 27 - den Trennschalter in einer rechtwinkligen Parallelprojektion, im Schnitt;

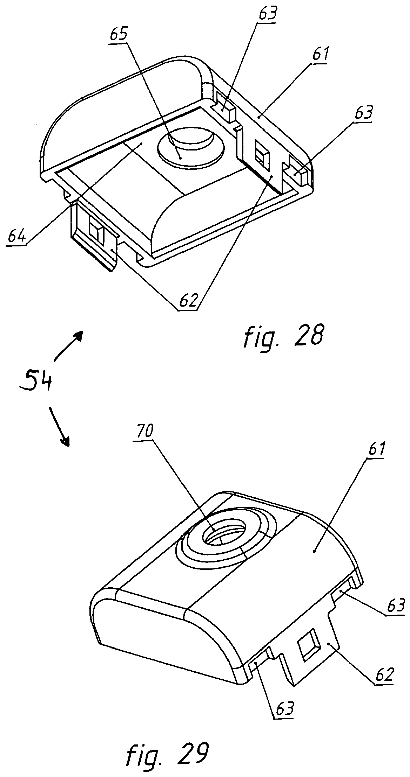

Fig. 28 - eine Kappe in einer perspektivischen Ansicht von unten;
Fig. 29 - die Kappe in einer perspektivischen Draufsicht.

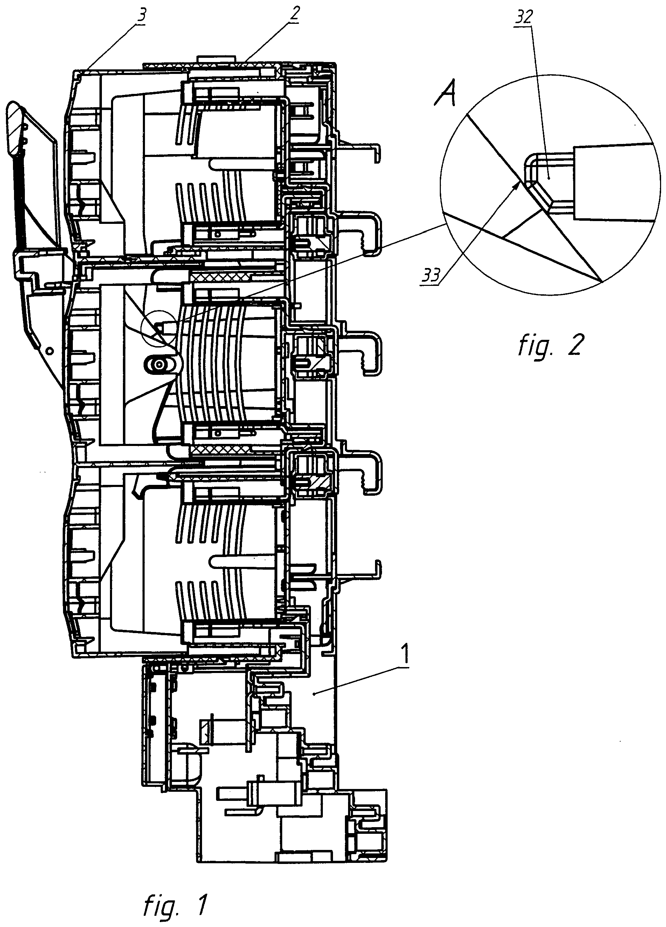

Ein Sicherungstrennschalter gemäß Fig. 1 beinhaltet ein komplettes Unterteil 1 mit einem daran aufgesetzten Gehäuse 2 und einem kompletten Deckel 3.

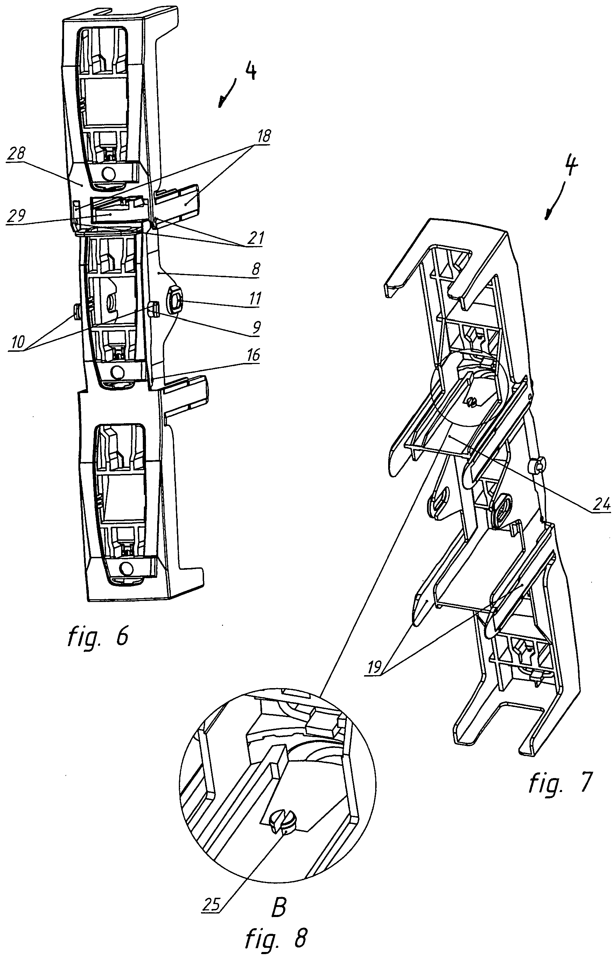

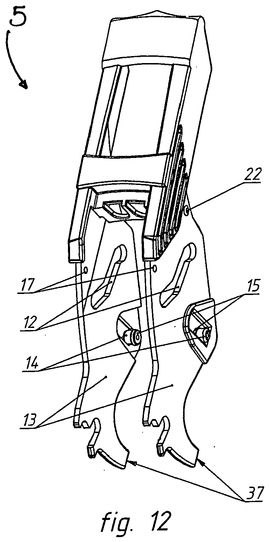

Der komplette Deckel 3 umfasst ein Kopfteil 4, einen Handgriff 5, ein Auslöselement 6 und drei Scheiben 7. Das Kopfteil 4 weist - im mittleren Teil seiner ersten Seitenteile 8 - erste Stifte 9 mit ersten Kragen 10 sowie ovale Öffnungen 11 auf. Die ersten Stifte 9 sind zu Ausschnitten 12, die sich in zweiten Seitenteilen 13 des Handgriffs 5 befinden, kompatibel (vergl. Figuren 6 und 12). An den Innenseiten der zweiten Seitenteile 13 des Handgriffs 5 befinden sich zweite Stifte 14 mit zweiten Kragen 15, die an die ovalen, in den Seitenteilen 8 des Kopfteils 4 angeordneten Öffnungen 11 angepasst sind.

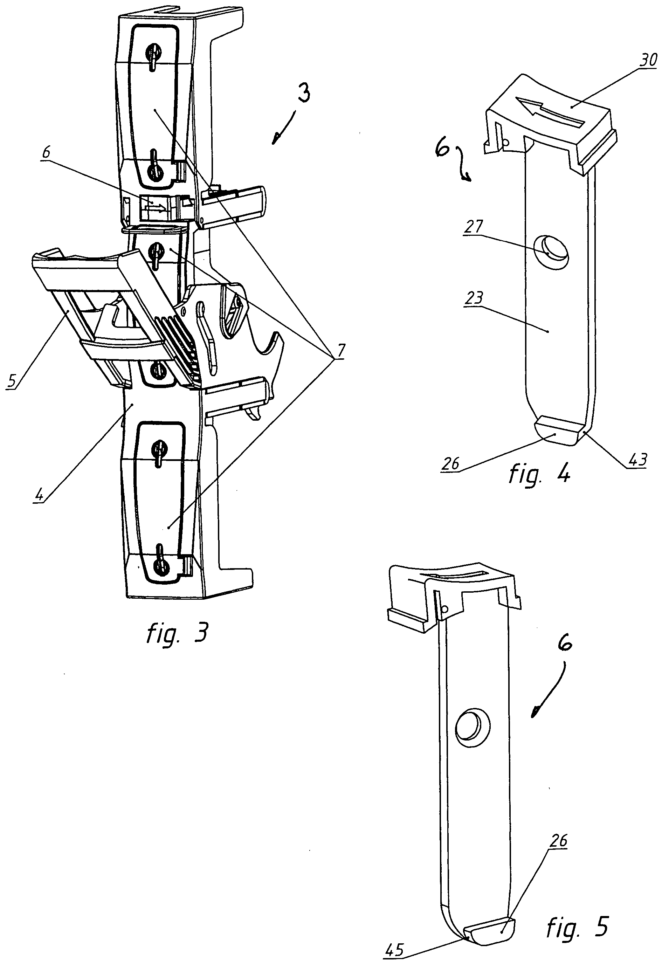

An den ersten Seitenteilen 8 des Kopfteils 4 sind erste Positionierungsellemente 16 angeordnet, die in einer offenen Position des Trennschalters in erste Öffnungen 17 im zweiten Seitenteil 13 des Handgriffs 5 eingreifen und den Handgriff 5 in einer offenen Position halten. (Verg. Figuren 3 und 6).

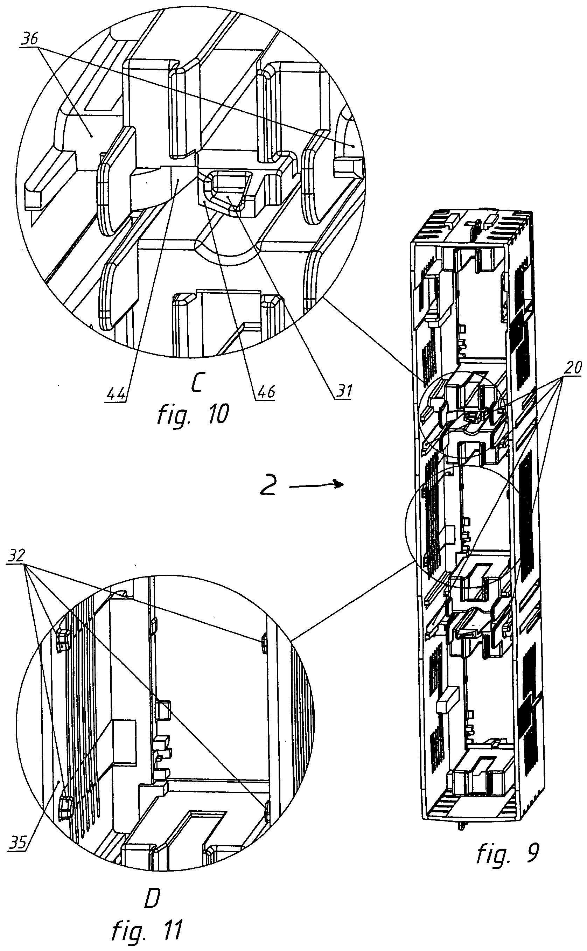

Das Kopfteil 4 umfasst erste Steckleisten 18 und zweite Steckleisten 19, die verschiebbar an die ersten, im Gehäuse 2 angeordneten Führungen 20 angepasst sind. Die ersten Steckleisten 18 weisen zweite Öffnungen 21 auf, die in einer geschlossenen Position oder Parkposition des Trennschalters sich mit den zweiten, an den zweiten Seitenteilen 13 des Handgriffs 5 angeordneten Positionierungselementen 22 verzahnen und dadurch den Handgriff 5 in einer geschlossenen Position halten. (Vergl. Figuren 9 und 12)

Das Auslöselement 6 weist an seinem dritten Seitenteil 23 eine dritte Öffnung 27 auf, in der ein dritter Stift 25 angeordnet ist, der sich an einer Trennwand 24 am Deckel 4 befindet. Dank dieser Verbindung ist es möglich, das Auslöselement 6 gegenüber dem Kopfteill 4 zu schwenken.(vergl. Fig. 4)

Das Kopfteil 4 weist in seinem Stirnteil 28 eine erste rechteckige Öffnung 29 auf, in der ein Griffteil 30 des Auslöselements 6 sich längs eines Bogens verlagert.

Das dritte Seitenteil 23 des Auslöselements 6 beinhaltet einen fünften Anschlag 26, der nach dem Öffnen oder "Einparken" des Kopfteils gegen einen sechsten Anschlag 31 im Gehäuse 2 stößt, was das Herausnehmen des kompletten Deckels 3 aus dem Gehäuse 2 unmöglich macht. Um den kompletten Deckel 3 aus dem Gehäuse 2 herauszunehmen, sollte man das Griffteil 30 des Auslöseelements 6 maximal nach rechts verschieben. In dieser Position kommt es zur Verschiebung des fünften Anschlags 26 des Auslöseelements 6 hinter den sechsten Anschlag 31 im Gehäuse 2. Beim erneuten Einlegen des kompletten Deckels 3 in das Gehäuse 2 zum Zwecke des Einparkens des Apparats kann sich das Griffteil 30 des Auslöseelements 6 in einer beliebigen Position befinden; der Handgriff 5 sollte jedoch dieselbe Position haben wie beim geschlossenen Trennschalter. Wenn das Griffteil 30 des Löselements 6 die rechte Endstellung eingenommen hat, dann verschiebt sich die an dem fünften Anschlag 26 des Auslöseelements 6 angeordnete, erste Gleitfläche 43 auf einer ersten Leitfläche 44 im Gehäuse 2, was eine Schwenkung des Auslöseelements 6 sowie eine Verschiebung des fünften Anschlags 26 in eine Position bewirkt, die das Herausnehmen des kompletten Deckels 3 aus dem Gehäuse 2 unmöglich macht.

Wenn aber das Griffteil 30 des Auslöseelements 6 sich nicht in der rechten Endstellung, sondern in einer anderen Position befindet, dann verschiebt sich eine zweite, am fünften Anschlag 26 des Auslöselements 6 angeordnete Gleitfläche 45 auf einer zweiten Leitfläche 46 im Gehäuse 2, worauf sich die erste, am fünften Anschlag 26 des Auslöselements 6 angeordnete Gleitfläche 43 auf der ersten Leitfläche 44 im Gehäuse 2 verschiebt, was wiederum eine Schwenkung des Ausöselements 6 sowie eine Verschiebung des fünften Anschlags 26 in eine Position bewirkt, die das Herausnehmen des kompletten Deckels 3 aus dem Gehäuse 2 unmöglich macht.

An Innenwänden 35 im Gehäuse 2 sind siebte Anschläge 32 angeordnet, gegen die in einer Parkposition des Trennschalters erste Stützflächen 33 stoßen, die am Handgriff 5 angeordnet sind. Das Gehäuse 2 beinhaltet vierte Stifte 36, die in einer Parkposition des Trennschalters sich an den ersten, am Handgriff 5 angeordneten Stützflächen 33 abstützen. Während des Verbindens kommt es zum Zusammenwirken der vierten Stifte 36 mit den in den zweiten Seitenteilen 13 des Handgriffs 5 angeordneten Ausschnitten 12, die einen Eingriffspunkt für sie bilden. Dadurch, dass sich die ersten Stützflächen 33 an den siebten Anschlägen 32 und an den oberen Teilen der vierten Stifte 36 abstützen, befindet sich der komplette Deckel 3 in einer Parkposition des Trennschalters in einer stabilen Lage; es gibt keine Möglichkeit, den Deckel 3 ins Innere des Gehäuses einzudrücken. Dabei macht der fünfte Anschlag 26, der gegen den sechsten Anschlag 31 im Gehäuse 2 stößt, das Herausnehmen des Deckels 3 unmöglich. 8 (Vergl. insbesondere Figuren 9-11)

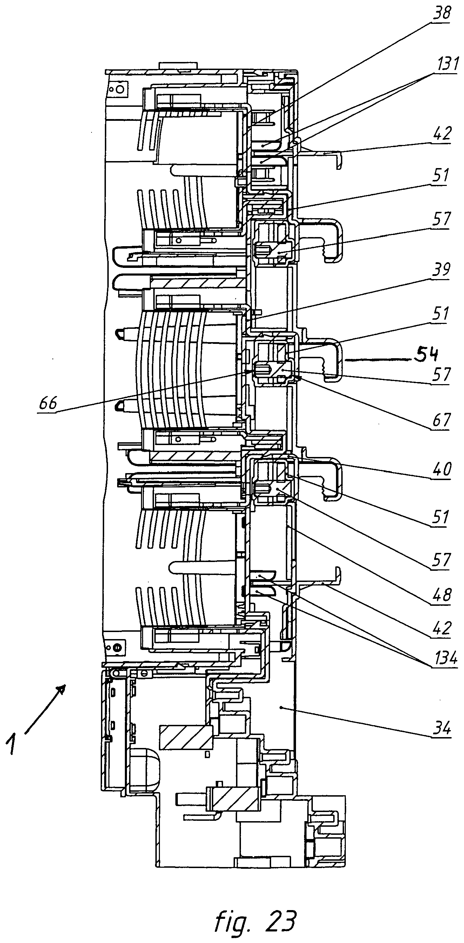

Das komplette Unterteil 1 gemäß den Figuren 1 und 23 besteht aus einem Basisteil 34, in dem drei Abflussschienen 37 und eine erste Anschlussschiene 38, eine zweite Anschlussschiene 39, eine dritte Anschlussschiene 40 und zwei Blockier-Maskierelemente 42 angeordnet sind, sowie aus einem Maskierelement 47.

Das komplette Unterteil 1 beinhaltet darüber hinaus ein Schienenmodul 48. Der Schienenmodul 48 besteht aus einer Abschirmung der Schienenklemmen 49, die wiederum aus einem zweiten Oberteil 119, einem zweiten Mittelteil 120 und einem zweiten Unterteil 121 besteht. Die Abschirmung der Schienenklemmen 49 weist Aussparungen 50 auf, in denen Klemmunterlagen 51 eingesetzt sind. Die Abschirmung der Schienenklemmen 49 weist auch Sicherungssitze 52 auf, an denen Schienenklemmen 53 verschiebbar montiert sind. Das Herausfallen der Schienenklemmen 53 wird von eine Blockade bildenden Kappen 54 verhindert. Die Abschirmung der Schienenklemmen 49 hat auch Stirnwände 116. An den Stirnflächen 55 der Schienenklemmen 53 befinden sich vierte, mit Gewinde versehenen Öffnungen 56, in denen Andrückschrauben 57 eingedreht sind. Die Abschirmung der Schienenklemmen 49 an ersten Seitenflächen 58 weist erste Daumen 59 und Positionierungsstifte 60 auf. Die Kappen 54 weisen an ihren zweiten Seitenflächen 61 erste Schnappverschlüsse 62 auf. Auf beiden Seiten der ersten Schnappverschlüsse 62 sind Positionierungssitze 63 symmetrisch angeordnet. An den Innenflächen 64 befinden sich erste Zentriersitze 65. Während der Montage der Kappen 54 am Schienenmodul 48 werden die Positionierungsstifte 60 in die ersten Positionierungssitze 63 eingeschoben, wodurch die richtige Lage der Kappe 54 im Verhältnis zur Abschirmung der Schienenklemmen 49 gesichert wird, wobei die ersten Schnappverschlüsse 62 an den ersten Daumen 59 anhaken. Gleichzeitig werden erste Enden 66 der Andrückschrauben 57 in den Zentriersitzen 65 platziert, wobei die anderen Enden der Andrückschrauben 67 in zweite Positionierungssitze 68 der Klemmunterlagen 51 gelangen und sich an zweiten Stützflächen 69 im Inneren der zweiten Positionierungssitze 68 abstützen. In dem vollständig montierten Schienenmodul 48 hat jede der drei Andrückschrauben 57 lediglich die Möglichkeit, sich um die eigene Längs-Symmetrieachse zu drehen, während alle anderen Bewegungsmöglichkeiten blockiert sind. Die Zentriersitze 65 haben konzentrisch angeordnete, durchgehende fünfte Öffnungen 70.

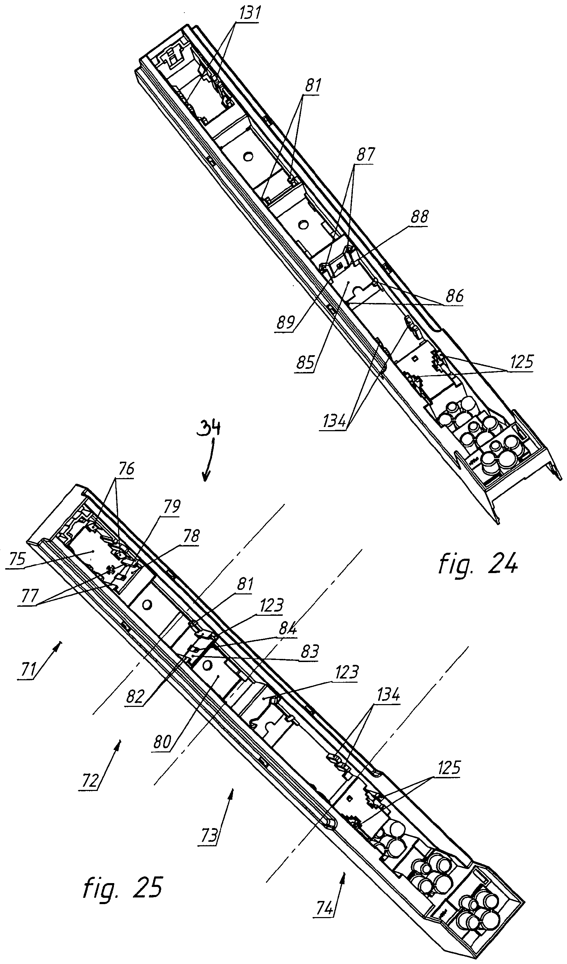

Das Basisteil 34 (vergl. Fig. 25) besteht aus einem Oberteil 71, einem Mittelteil 72, einem Unterteil 73 und einem Anschlussteil 74. Das Basisteil 34 weist in seinem Oberteil 71 einen ersten Befestigungssitz 75 auf, der aus zweiten Schnappverschlüssen 76, zweiten, an den Rändern einer ersten Sicherungsfläche 78 befindlichen Führungen 77 und zweiten, in der Mitte der ersten Sicherungsfläche 78 befindlichen Daumen 79 besteht. Das Mittelteil 72 des Basisteils 34 beinhaltet einen zweiten Befestigungssitz 80, der aus dritten Schnappverschlüssen 81, dritten, an den Rändern einer zweiten Sicherungsfläche 83 befindlichen Führungen 82 und dritten, in der Mitte der zweiten Sicherungsfläche 83 befindlichen Daumen 84 besteht. Das Unterteil 73 des Basisteils 34 enthält einen dritten Befestigungssitz 85, der aus vierten Schnappverschlüssen 86, vierten, an den Rändern einer dritten Sicherungsfläche 88 befindlichen Führungen 87 und eines vierten, in der Mitte der dritten Sicherungsfläche 88 befindlichen Daumens 89 besteht.

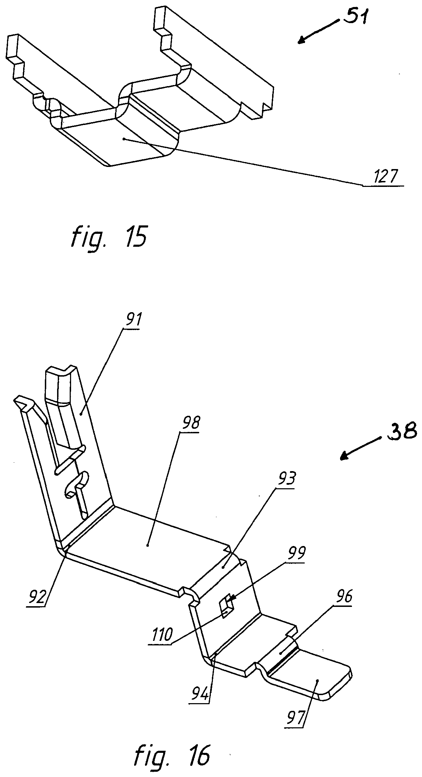

Die mit dem Basisteil 34 verbundene erste Anschlussschiene 38 (vergl. Fig. 16) ist aus einem Stück Flachleiste gefertigt. Am ersten Ende der ersten Anschlussschiene 38 ist ein Kontaktelement 91 ausgebildet, wonach eine erste Biegung 92 in einem Winkel von 90°, eine zweite Biegung 93 in einem Winkel von 90° (in einer Richtung, die der Richtung der ersten Biegung 92 entgegengesetzt ist) und eine dritte Biegung 94 in einem Winkel von 90° (in einer Richtung, die mit der Richtung der ersten Biegung 92 übereinstimmt) angeordnet ist. Am anderen Ende der ersten Anschlussschiene 38 befindet sich ein Rezess 96, der ein erstes Klemmteil 97 bildet. Zwischen der ersten Biegung 92 und der zweiten Biegung 93 beinhaltet die erste Anschlussschiene 38 ein erstes Befestigungsteil 98, während zwischen der zweiten Biegung 93 und der dritten Biegung 94 die zweite rechteckige Öffnung 99 angeordnet ist.

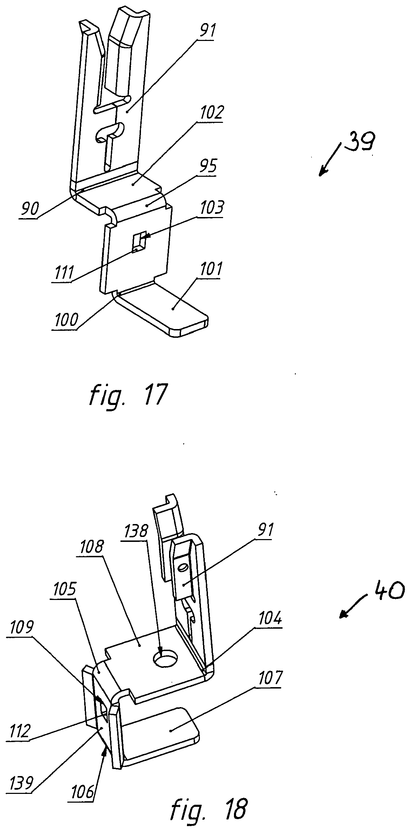

Die zweite Anschlussschiene 39 (vergl. Fig. 17) ist aus einem Stück Flachleiste gefertigt. Am ersten Ende der zweiten Anschlussschiene 39 ist ein Kontaktelement 91 ausgebildet, wonach eine vierte Biegung 90 in einem Winkel von 90°, eine fünfte Biegung 95 in einem Winkel von 90° (in einer Richtung, die der Richtung der vierten Biegung 90 entgegengesetzt ist) und eine sechste Biegung 100 in einem Winkel von 90° (in einer Richtung, die mit der Richtung der vierten Biegung 90 übereinstimmt) angeordnet ist, wodurch sich ein zweites Klemmteil 101 bildet. Die zweite Anschlussschiene 39, die sich zwischen der vierten Biegung 90 und der fünften Biegung 95 befindet, enthält ein zweites Befestigungsteil 102, wobei zwischen der fünften Biegung 95 und der sechsten Biegung 100 eine dritte rechteckige Öffnung 103 angeordnet ist.

Die dritte Anschlussschiene 40 (vergl. Fig. 18) ist aus einem Stück Flachleiste gefertigt. Am ersten Ende der dritten Anschlussschiene 40 ist ein Kontaktelement 91 ausgebildet, wonach eine siebte Biegung 104 in einem Winkel von 90°, eine achte Biegung 105 in einem Winkel von 90° (in einer Richtung, die der Richtung der siebten Biegung 104 entgegengesetzt ist) und eine neunte Biegung 106 in einem Winkel von 90° (in einer Richtung, die der Richtung der siebten Biegung 104 entgegengesetzt ist) angeordnet ist, wodurch sich ein drittes Klemmteil 107 bildet. Die dritte, zwischen der siebten Biegung 104 und der achten Biegung 105 angeordnete Anschlussschiene 40 beinhaltet ein drittes Befestigungsteil 108. Zwischen der achten Biegung 105 und der neunten Biegung 106 befindet sich eine vierte rechteckige Öffnung 109.

Die erste Anschlussschiene 38 ist in die zweiten Führungen 77 eingeschoben und durch die zweiten Schnappverschlüsse 76 und die zweiten Daumen 79 fixiert. Die zweiten Schnappverschlüsse 76 stützen sich am ersten Befestigungsteil 98 der ersten Anschlussschiene 38 ab, wobei sich ein zweiter Daumen 79 an einer dritten Stützfläche 110 abstützt, die in einer zweiten rechteckigen Öffnung 99 der ersten Anschlussschiene 38 angeordnet ist. Eine solche Befestigung der ersten Anschlussschiene 38 bewirkt, dass das erste Klemmteil 97 in einer ersten Anschlusskammer 113 platziert wird, die sich am kompletten Unterteil 1 von unten befindet.

Die zweite Anschlussschiene 39 ist in die dritten Führungen 82 eingeschoben und durch die dritten Schnappverschlüsse 81 und die dritten Daumen 84 fixiert. Die dritten Schnappverschlüsse 81 stützen sich am zweiten Befestigungsteil 102 der zweiten Anschlussschiene 39 ab, wobei sich der dritte Daumen 84 an einer vierten Stützfläche 111 abstützt, die in der dritten rechteckige Öffnung 103 der zweiten Anschlussschiene 39 angeordnet ist. Eine solche Befestigung der zweiten Anschlussschiene 39 bewirkt, dass das zweite Klemmteil 101 in einer zweiten Anschlusskammer 114 platziert wird, die sich am kompletten Unterteil 1 von unten befindet.

Die dritte Anschlussschiene 40 ist in die vierten Führungen 87 eingeschoben und durch die vierten Schnappverschlüsse 86 und die vierten Daumen 89 fixiert. Die vierten Schnappverschlüsse 86 stützten sich am dritten Befestigungsteil 108 der dritten Anschlussschiene 40 ab, wobei der vierte Daumen 89 sich an einer fünften Stützfläche 112 abstützt, die in der vierten rechteckigen Öffnung 109 der dritten Anschlussschiene 40 angeordnet ist. Eine solche Befestigung der dritten Anschlussschiene 40 bewirkt, dass das dritte Klemmteil 107 in einer dritten Anschlusskammer 115 platziert wird, die sich am kompletten Unterteil 1 von unten befindet.

Um einen kompletten Trennschalter für eine Montage an einer Schienenbrücke mit nach unten gerichteten Stromabflüssen zu erhalten, sollte der Schienenmodul 48 im kompletten Unterteil 1 so platziert werden, um zu erreichen, dass die am zweiten Oberteil 119 des Schienenmoduls 48 angeordnete Kappe 54 sich in der ersten Anschlusskammer 113 des kompletten Unterteils 1 befindet, eine weitere, am zweiten Mittelteil 120 des Schienenmoduls 48 angeordnete Kappe 54 sich in der zweiten Anschlusskammer 114 des kompletten Unterteils 1 befindet und eine letzte, am zweiten Unterteil 121 des Schienenmoduls 48 angeordnete Kappe 54 sich in der dritten Anschlusskammer 115 des kompletten Unterteils 1 befindet, wobei die Stirnwände 116 der Abschirmung der Schienenklemmen 53 in Richtung Anschlussteil 74 des Basisteils 34 zeigen sollten, während dritte Gleitflächen 122 des Schienenmoduls 48 sich auf sechsten Stützflächen 123 des kompletten Unterteils 1 aufsetzen.

Während des Verschiebens des Schienenmoduls 48 in Richtung des Oberteils 71 des Basisteils 34 verlagern sich vierte Gleitflächen 124 des Schienenmoduls 48 an vierten, am Anschlussteil 74 des Basisteils 34 angeordneten Stiften 125, wodurch es zum Biegen von ersten elastischen Armen 126 kommt. Das Verschieben des Schienenmoduls 48 in Richtung des Oberteils 71 des Basisteils 34 hat auch zur Folge, dass eine am zweiten Oberteil 119 des Schienenmoduls 48 angeordnete Andrückfläche 127 der Klemmunterlage 51 das erste Klemmteil 97 der ersten Anschlussschiene 38 überlappt, dass die am zweiten Mittelteil 120 des Schienenmoduls 48 angeordnete Andrückfläche 127 das zweite Klemmteil 101 der zweiten Anschlussschiene 39 überlappt und dass die am zweiten Unterteil 121 des Schienenmoduls 48 angeordnete Andrückfläche 127 das dritte Klemmteil 107 der dritten Anschlussschiene 40 überlappt.

Zusätzlich gelangt während des Verschiebens des Schienenmoduls 48 in Richtung des Oberteils 71 des Basisteils 34 eine erste, sich an zweiten elastischen Armen 128 des Schienenmoduls 48 befindende Vertiefung 117 unter das Maskierelement 47, wodurch eine Informationsaufschrift, z.B. "PUSH", verdeckt wird. Nach einer maximalen Verschiebung des Schienenmoduls 48 kommt es zum Herunterspringen der vierten Gleitflächen 124 des Schienenmoduls 48 von den vierten Stiften 125 und zum Anhaken von fünften Stützflächen 129 an die vierten Stifte 125, wodurch der Schienenmodul 48 an dem kompletten Unterteil 1 fixiert wird. Bei einer solchen Position des Schienenmoduls 48 am kompletten Unterteil 1 kommt es zur vollständigen Aufschiebung der am zweiten Oberteil 119 der Schienenklemmen-Abschirmung 49 angeordneten Andrückfläche 127 auf das erste Klemmteil 97 der ersten Anschlussschiene 38, zur vollständigen Aufschiebung der am zweiten Mittelteil 120 des Schienenmoduls 48 angeordneten Andrückfläche 127 auf das zweite Klemmteil 101 der zweiten Anschlussschiene 39 sowie zur vollständigen Aufschiebung der am zweiten Unterteil 121 des Schienenmoduls 48 angeordneten Andrückfläche 127 auf das dritte Klemmteil 107 der dritten Anschlussschiene 40. Außerdem bewirkt das Hineinschieben von fünften Daumen 132 des Blockier-Maskierelements 42 in dieser Position durch zweite, im Schienenmodul 49 befindlichen Ausschnitte 130 in vierte, am ersten Oberteil 71 des Basisteils 34 angeordnete Führungen 131, dass im Falle einer Montage des besagten Trennschalters an einer Schienenbrücke die Schienenbrücke von oben, auf der ganzen Breite des kompletten Unterteils 1 des Leistensicherungstrennschalters abgedeckt ist. Darüber hinaus erfüllt das Blockier-Maskierelement 42 noch eine weitere Funktion, indem es der Schienenmodul 48 vor dem Herausschieben aus dem kompletten Unterteil 1 zusätzlich sichert.

Das Hineinschieben der fünften Daumen 132 eines weiteren Blockier-Maskierelements 42 durch dritte, im Schienenmodul 48 befindlichen Ausschnitte 133 in fünfte, am ersten Unterteil 73 des Basisteils 34 angeordnete Führungen 134 bewirkt im Falle einer Montage des besagten Trennschalters an einer Schienenbrücke, dass die Schienenbrücke von unten auf der ganzen Breite des kompletten Unterteils 1 des LeistenSicherungstrennschalters abgedeckt ist.

Darüber hinaus erfüllt das am ersten Unterteil 73 des Basisteils 34 montierte Blockier-Maskierelement 42 noch eine weitere Funktion, indem es der Schienenmodul 48 vor dem Herausschieben aus dem kompletten Unterteil 1 zusätzlich absichert und eine zweite Vertiefung 118 samt einer Informationsaufschrift, z.B. "PUSH", verdeckt.

Das Befestigen des Trennschalters an einer Schienenbrücke ist nach dem Herausnehmen des kompletten Deckels 3 aus dem Gehäuse 2 möglich. Dann erreicht man nämlich einen Zugang zu den Andrückschrauben 57 und bekommt die Möglichkeit, den Trennschalter an den Sammelschienen durch das Anziehen der Schrauben zu befestigen.

Um die Richtung des Stromabflusses zu ändern, so dass der Abfluss nicht mehr nach unten, sondern nach oben gerichtet ist, sollte zunächst das Blockier-Maskierelement 42 aus dem ersten Oberteil 71 des Basisteils 34 herausgeschoben werden und dann das Blockier-Maskierelement 42 aus dem ersten Unterteil 73 des Basisteils 34 herausgeschoben werden, wodurch eine Informationsaufschrift, z.B. "PUSH", die sich in der zweiten Vertiefung 118 des Schienenmoduls 48 befindet, geöffnet wird. Nach dem Andrücken der zweiten Vertiefung 118 des Schienenmoduls 48 und Biegen der ersten elastischen Arme 126 verlagert sich die fünfte Stützfläche 129 hinter die vierten Stifte 125, wodurch das Verschieben des Schienenmoduls 48 möglich wird. In Folge dessen verschieben sich die fünften Gleitflächen 135, die an den ersten elastischen Armen 126 angeordnet sind, was wiederum dazu führt, dass die am zweiten Oberteil 119 des Schienenmoduls 48 angeordnete Andrückfläche 127 vom ersten Klemmteil 97 der ersten Anschlussschiene 38 abrutscht, die am zweiten Mittelteil 120 des Schienenmoduls 48 angeordnete Andrückfläche 127 vom zweiten Klemmteil 101 der zweiten Anschlussschiene 39 abrutscht und die am zweiten Unterteil 121 des Schienenmoduls 48 angeordnete Andrückfläche 127 vom dritten Klemmteil 107 der dritten Anschlussschiene 40 abrutscht. Beim vollständigem Verschieben des Schienenmoduls 49 kommt es zum Herunterspringen der fünften Gleitflächen 135 von den vierten Stiften 125. In dieser Position ist es möglich, der Schienenmodul 49 aus dem kompletten Unterteil 1 ganz herauszunehmen.

Um einen kompletten Trennschalter für eine Montage an einer Schienenbrücke mit nach oben gerichteten Stromabflüssen zu erhalten, sollte der Schienenmodul 49 um einen Winkel von 180 Grad gegenüber der Quer-Symmetrieachse des Schienenmoduls 49 gedreht werden, wonach der Schienenmodul 48 im kompletten Unterteil 1 so platziert werden sollte, um zu erreichen, dass die am zweiten Oberteil 119 des Schienenmoduls 48 angeordnete Kappe 54 sich in der dritten Anschlusskammer 115 des kompletten Unterteils 1 befindet, eine weitere, am zweiten Mittelteil 120 des Schienenmoduls 48 angeordnete Kappe 54 sich in der zweiten Anschlusskammer 114 des kompletten Unterteils 1 befindet und eine letzte, am zweiten Unterteil 121 des Schienenmoduls 48 angeordnete Kappe 54 sich in der ersten Anschlusskammer 113 des kompletten Unterteils 1 befindet, wobei die Stirnwände 116 der Abschirmung der Schienenklemmen 53 in Richtung des ersten Oberteils 71 des Basisteils 34 zeigen sollten, während die dritten Gleitflächen 122 des Schienenmoduls 48 sich auf den sechsten Stützflächen 123 des kompletten Unterteils 1 aufsetzen. Während des Verschiebens des Schienenmoduls 48 in Richtung des Oberteils 71 des Basisteils 34 verlagern sich sechste Gleitflächen 137 des Schienenmoduls 48 an vierten, am Anschlussteil 74 des Basisteils 34 angeordneten Stiften 125, wodurch es zum Biegen der zweiten elastischen Arme 128 kommt. Das Verschieben des Schienenmoduls 48 in Richtung des Oberteils 71 des Basisteils 34 hat auch zur Folge, dass die am zweiten Unterteil 121 der Abschirmung der Schienenklemmen 49 angeordnete Andrückfläche 127 das erste Klemmteil 97 der ersten Anschlussschiene 38 überlappt, dass die am zweiten Mittelteil 120 des Schienenmoduls 48 angeordnete Andrückfläche 127 das zweite Klemmteil 101 der zweiten Anschlussschiene 39 überlappt und dass die am zweiten Oberteil 119 des Schienenmoduls 48 angeordnete Andrückfläche 127 das dritte Klemmteil 107 der dritten Anschlussschiene 40 überlappt. Zusätzlich gelangt während des Verschiebens des Schienenmoduls 48 in Richtung des Oberteils 71 des Basisteils 34 die zweite, sich an den ersten elastischen Armen 126 des Schienenmoduls 48 befindende Vertiefung 118 unter das Maskierelement 47, wodurch eine Informationsaufschrift, z.B. "PUSH", verdeckt wird. Nach einer maximalen Verschiebung des Schienenmoduls 48 kommt es zum Herunterspringen der sechsten Gleitflächen 137 des Schienenmoduls 48 von den vierten Stiften 125 und zum Anhaken von sechsten Stützflächen 136 an die vierten Stifte 125, wodurch der Schienenmodul 48 an dem kompletten Unterteil 1 fixiert wird. Bei einer solchen Position des Schienenmoduls 48 am kompletten Unterteil 1 kommt es zur vollständigen Aufschiebung der am zweiten Unterteil 121 des Schienenmoduls 48 angeordneten Andrückfläche 127 auf das erste Klemmteil 97 der ersten Anschlussschiene 38, zur Überlappung der am zweiten Mittelteil 120 des Schienenmoduls 48 angeordneten Andrückfläche 127 auf das zweite Klemmteil 101 der zweiten Anschlussschiene 39 und zur Überlappung der am zweiten Oberteil 119 der Abschirmung der Schienenklemmen 49 angeordneten Andrückfläche 127 auf das dritte Klemmteil 107 der dritten Anschlussschiene 40. Außerdem bewirkt das Hineinschieben der fünften Daumen 132 des Blockier-Maskierelements 42 in dieser Position durch die dritten, im Schienenmodul 49 befindlichen Ausschnitte 133 in die vierten, am ersten Oberteil 71 des Basisteils 34 angeordneten Führungen 131, dass im Falle einer Montage des besagten Trennschalters an einer Schienenbrücke die Schienenbrücke von oben auf der ganzen Breite des kompletten Unterteils 1 des LeistenSicherungstrennschalters abgedeckt ist.

Darüber hinaus erfüllt das Blockier-Maskierelement 42 noch eine weitere Funktion, indem es der Schienenmodul 48 vor dem Herausschieben aus dem kompletten Unterteil 1 zusätzlich absichert.

Das Hineinschieben der fünften Daumen 132 eines weiteren Blockier-Maskierelements 42 durch die zweiten, im Schienenmodul 49 befindlichen Ausschnitte 130 in die fünften, am ersten Unterteil 73 des Basisteils 34 angeordneten Führungen 134 bewirkt im Falle einer Montage des besagten Trennschalters an einer Schienenbrücke, dass die Schienenbrücke von unten auf der ganzen Breite des kompletten Unterteils 1 des LeistenSicherungstrennschalters abgedeckt ist. Darüber hinaus erfüllt das am ersten Unterteil 73 des Basisteils 34 montierte Blockier-Maskierelement 42 noch eine weitere Funktion, indem es der Schienenmodul 48 vor dem Herausschieben aus dem kompletten Unterteil 1 zusätzlich absichert und die erste Vertiefung 117 samt einer Informationsaufschrift, z.B. "PUSH", verdeckt.

| nummer | deutsch | in welcher Figur? |
|---|---|---|
| 1 | Unterteil | 1, 23 |
| 2 | Gehäuse | 1, 9 |
| 3 | Deckel | 1, 3 |
| 4 | Kopfteil | 3, 6, 7 |
| 5 | Handgriff | 3, 12 |
| 6 | Auslöseelement | 3, 4, 5 |
| 7 | Scheibe | 3 |
| 8 | Seitenteil | 6 |
| 9 | Stift | 6 |
| 10 | Kragen | 6 |
| 11 | Öffnung | 6 |
| 12 | Ausschnitt | 12 |
| 13 | zweite Seitenteile | 12 |
| 14 | zweite Stifte | 12 |
| 15 | Kragen | 12 |
| 16 | Positionierungselement | 6 |
| 17 | Öffnung | 12 |
| 18 | Steckleiste | 6 |
| 19 | Steckleiste | 7 |
| 20 | Führung | 9 |
| 21 | Öffnung | 6 |
| 22 | Positionierungselement | 12 |
| 23 | Seitenteil | 4 |
| 24 | Trennwand | 7 |
| 25 | dritter Stift | 8 |
| 26 | fünfter Anschlag | 4, 5 |
| 27 | dritte Öffnung | 4 |
| 28 | Stirnteil | 6 |
| 29 | Öffnung | 6 |
| 30 | Griffteil | 4 |
| 31 | sechster Anschlag | 10 |
| 32 | siebter Anschles | 2, 11 |
| 33 | Stützflächen | 2 |
| 34 | Basisteil | 23 |
| 35 | Innenwände | 11 |
| 36 | vierter Stift | 10 |
| 37 | Abflussschiene | 12 |
| 38 | erste Anschlussschiene | 16, 23 |
| 39 | zweite Anschlussschiene | 17, 23 |
| 40 | dritte Anschlussschiene | 18, 23 |
| 41 | | |
| 42 | Blockier-Maskierelemente | 23 |
| 43 | Gleitfläche | 4 |
| 44 | Leitfläche | 10 |
| 45 | Gratfläche | 5 |
| 46 | Leitfläche | 10 |
| 47 | Maskierelement | 26, 27 |
| 48 | Schienenmodul | 23 |
| 49 | Abschirmung der Schienenklemmen | 13, 20, 21 |
| 50 | Aussparung | 13 |
| 51 | Klemmunterlage | 14, 15, 20, 21, 23 |
| 52 | Sicherungssitz | 13 |
| 53 | Schienenklemme | 20, 22, 23, 28, 29 |
| 54 | Klappe | 20 |
| 55 | Stirnfläche | 22 |
| 56 | vierte Öffnung | 22 |
| 57 | Andrücksschraube | 23 |
| 58 | erste Seitenfläche | 13 |
| 59 | erster Daumen | 13 |
| 60 | Positionierungsstift | 13 |
| 61 | zweite Seitenfläche | 28, 29 |
| 62 | erster Schnappverschluss | 28, 29 |
| 63 | Positionierungssitz | 28, 29 |
| 64 | Innenfläche | 28 |
| 65 | Zentriersitz | 28 |
| 66 | erstes Ende | 23 |
| 67 | Andrücksschraube | 23 |
| 68 | zweiter Positionierungssitz | 14 |
| 69 | zweite Stützfläche | 14 |
| 70 | fünfte Öffnung | 29 |
| 71 | Oberteil | 25 |
| 72 | Mittelteil | 25 |
| 73 | Unterteil | 25 |
| 74 | Anschlussteil | 25 |
| 75 | Befestigungssitz | 25 |
| 76 | zweiter Schnappverschluss | 25 |
| 77 | zweite Führung | 25 |
| 78 | erste Sicherungsfläche | 25 |
| 79 | zweiter Daumen | 25 |
| 80 | zweiter Befestigungssitz | 25 |
| 81 | dritter Schnappverschluss | 24, 25 |
| 82 | dritte Führung | 25 |
| 83 | zweite Sicherungsfläche | 25 |
| 84 | dritter Daumen | 25 |
| 85 | dritter Befestigungssitz | 24 |
| 86 | vierter Schnappverschluss | 24 |
| 87 | vierte Führung | 24 |
| 88 | dritte Sicherungsfläche | 24 |
| 89 | vierter Daumen | 24 |
| 90 | vierte Biegung | 17 |
| 91 | Kontaktelement | 16, 17, 18 |
| 92 | erste Biegung | 16 |
| 93 | zweite Biegung | 16 |
| 94 | dritte Biegung | 16 |
| 95 | fünfte Biegung | 17 |
| 96 | Rezess | 16 |
| 97 | erstes Klemmteil | 16 |
| 98 | erstes Befestigungsteil | 16 |
| 99 | zweite rechteckige Öffnung | 16 |
| 100 | sechste Biegung | 17 |
| 101 | zweites Klemmteil | 17 |
| 102 | zweites Befestigungsteil | 17 |
| 103 | dritte rechteckige Öffnung | 17 |
| 104 | siebte Biegung | 18 |
| 105 | Biegung | 18 |
| 106 | neunte Biegung | 18 |
| 107 | drittes Klemmteil | 18 |
| 108 | drittes Befestigungsteil | 18 |
| 109 | vierte rechteckige Öffnung | 18 |
| 110 | dritte Stützfläche | 16 |
| 111 | vierte Stützfläche | 17 |
| 112 | fünfte Stützfläche | 18 |
| 113 | erste Anschlusskammer | 26, 27 |
| 114 | zweite Anschlusskammer | 26, 27 |
| 115 | dritte Anschlusskammer | 26, 27 |
| 116 | Stirnwand | 13 |
| 117 | erste Vertiefung | 21 |
| 118 | zweite Vertiefung | 21 |
| 119 | zweites Oberteil | 20 |
| 120 | zweites Mittelteil | 20 |
| 121 | zweites Unterteil | 20 |
| 122 | dritte Gleitfläche | 20 |
| 123 | sechste Stützfläche | 25 |
| 124 | vierte Gleitfläche | 20 |
| 125 | vierte Stifte | 24, 25 |
| 126 | erster elastischer Arm | 20, 21 |
| 127 | Andruckfläche | 15, 21 |
| 128 | zweiter elastischer Arm | 20, 21 |
| 129 | fünfte Stützfläche | 20 |
| 130 | zweiter Ausschnitt | 20, 21 |
| 131 | vierte Führung | 23, 24 |
| 132 | fünfter Daumen | 19 |
| 133 | dritter Ausschnitt | 20, 21 |
| 134 | fünfte Führung | 23, 24, 25 |
| 135 | fünfte Gleitfläche | 21 |
| 136 | sechste Stützfläche | 20 |
| 137 | sechste Gleitfläche | 20 |

## Patentansprüche

1. Sicherungstrennschalter, umfassend ein komplettes Unterteil (1) mit einem daran aufgesetzten Gehäuse (2) und einem kompletten Deckel (3),
wobei das Unterteil (1) ein Basisteil (34) und einen Schienenmodul (48) mit wenigstens einer Schienenklemme (53) aufweist, die zur Montage an einer Schienenbrücke dient,
wobei der Schienenmodul (48) zwei elastische Arme (126; 128) hat, welche wiederum jeweils eine Stützfläche (129; 136) aufweisen, die sich an am Basisteil (34) angeordneten Auflageteilen abstützt und den Schienenmodul (48) an dem kompletten Unterteil (1) fixiert,
**dadurch gekennzeichnet, dass**
- die Auflageteile vierte Stifte (125) sind, welche an einem Anschlussteil (74) des Basisteils (34) angeordnet sind,
- der Schienenmodul (48) vierte und sechste Gleitflächen (124; 137) aufweist, welche sich während des Verschiebens des Schienenmoduls (48) in Richtung eines Oberteils (71) des Basisteils (34) an den vierten Stiften (125) verlagern und die elastischen Armen (126; 128) biegen,
- das Herausnehmen und Drehen des Schienenmoduls (48) gleichzeitig das Drehen aller Schienenklemmen (53) bewirkt, wodurch es zur Änderung der Abflussrichtung kommt.

2. Sicherungstrennschalter nach Anspruch 1, **dadurch gekennzeichnet, dass** der Schienenmodul (48) dritte Ausschnitte (133) aufweist, die zusammen mit den in einem ersten Unterteil (73) des Basisteils (34) angeordneten, fünften Führungen (134) das Hineinschieben von fünften Daumen (132) eines Blockier-Maskierelements (42) ermöglichen, welches den Schienenmodul (48) vor dem Herausschieben aus dem kompletten Unterteil (1) zusätzlich absichert.

3. Sicherungstrennschalter nach Anspruch 1, **dadurch gekennzeichnet, dass** der Schienenmodul (48) zweite Ausschnitte (130) aufweist, die zusammen mit den in einem ersten Oberteil (71) des Basisteils (34) angeordneten, vierten Führungen (131) das Hineinschieben der fünften Daumen (132) des Blockier-Maskierelements (42) ermöglichen, welches den Schienenmodul (48) vor dem Herausschieben aus dem kompletten Unterteil (1) zusätzlich absichert.

4. Sicherungstrennschalter nach Anspruch 1, **dadurch gekennzeichnet, dass** der erste und zweite elastische Arm (126; 128) vierte und fünfte Gleitflächen (124; 135) aufweist, die die elastischen Arme (126; 128) des Schienenmoduls (48) biegen, indem sie sich an den am Anschlussteil (74) des Basisteils (34) angeordneten vierten Stiften (125) verlagern.

5. Sicherungstrennschalter nach Anspruch 1, **dadurch gekennzeichnet, dass** der Schienenmodul (48) eine erste und zweite Vertiefung (117; 118) aufweist, die sich beim Andrücken die ersten und zweiten elastischen Arme (126; 128) biegt, wodurch sich die fünfte und sechste Stützfläche (129; 136) hinter die vierten Stifte (125) verlagert und den Schienenmodul (48) entsperrt und das Verschieben und Herausnehmen des Schienenmoduls (48) aus dem kompletten Unterteil (1) ermöglicht.

6. Sicherungstrennschalter nach Anspruch 5, **dadurch gekennzeichnet, dass** die zweite, sich an den ersten elastischen Armen (126) des Schienenmoduls (48) befindende Vertiefung (118) während des Verschiebens des Schienenmoduls (48) in Richtung des Oberteils (71) des Basisteils (34) unter ein Maskierelements (47) gelangt, wodurch eine Informationsaufschrift, wie "PUSH", verdeckt werden kann.

7. Sicherungstrennschalter nach einem der vorhergehenden Ansprüche, **dadurch gekennzeichnet, dass** der Schienenmodul (48) eine Abschirmung (49) der Schienenklemmen (53) aufweist,
wobei die Abschirmung (49) Sicherungssitze (52) hat, an denen die Schienenklemmen (53) verschiebbar montiert sind
und wobei das Herausfallen der Schienenklemmen (53) von eine Blockade bildenden Kappen (54) verhindert werden kann, welche sich jeweils in einer Anschlusskammer (113, 114, 115) des Basisteils (34) verbergen.

## Claims

1. Fuse disconnect switch, comprising a complete lower part (1) with a housing (2) placed thereon and a complete cover (3),
wherein the lower part (1) has a base part (34) and a bar module (48) with at least one bar clamp (53) which is used for mounting on a bar bridge,
wherein the bar module (48) has two elastic arms (126; 128) which, in turn, each have a support surface (129; 136) which is supported on bearing parts arranged on the base part (34) and fixes the bar module (48) to the complete lower part (1),
**characterised in that**
- the bearing parts are fourth pins (125) which are arranged on a connection part (74) of the base part (34),
- the bar module (48) has fourth and sixth sliding surfaces (124; 137) which, during the displacement of the bar module (48) in the direction of an upper part (71) of the base part (34), are displaced on the fourth pins (125) and bend the elastic arms (126; 128),
- the removal and rotation of the bar module (48) simultaneously causes the rotation of all of the bar clamps (53), thus resulting in the change in the drain direction.

2. Fuse disconnect switch as claimed in claim 1, **characterised in that** the bar module (48) has third cut-outs (133) which, together with the fifth guides (134) arranged in a first lower part (73) of the base part (34), permit the insertion of fifth tappets (132) of a blocking-masking element (42) which additionally protects the bar module (48) against being pushed out of the complete lower part (1).

3. Fuse disconnect switch as claimed in claim 1, **characterised in that** the bar module (48) has second cut-outs (130) which, together with the fourth guides (131) arranged in a first upper part (71) of the base part (34), permit the insertion of the fifth tappets (132) of the blocking-masking element (42) which additionally protects the bar module (48) against being pushed out of the complete lower part (1).

4. Fuse disconnect switch as claimed in claim 1, **characterised in that** the first and second elastic arms (126; 128) have fourth and fifth sliding surfaces (124; 135) which bend the elastic arms (126; 128) of the bar module (48), **in that** they are displaced on the fourth pins (125) arranged on the connection part (74) of the base part (34).

5. Fuse disconnect switch as claimed in claim 1, **characterised in that** the bar module (48) has a first and second depression (117; 118) which bends when the first and second elastic arms (126; 128) are pressed, whereby the fifth and sixth support surfaces (129; 136) are displaced behind the fourth pins (125) and unblock the bar module (48) and permit the displacement and removal of the bar module (48) from the compete lower part (1).

6. Fuse disconnect switch as claimed in claim 5, **characterised in that**, during the displacement of the bar module (48) in the direction of the upper part (71) of the base part (34), the second depression (118) which is located on the first elastic arms (126) of the bar module (48) passes under a masking element (47), whereby an information sign, e.g. "PUSH" can be concealed.

7. Fuse disconnect switch as claimed in any one of the preceding claims, **characterised in that** the bar module (48) has a shield (49) of the bar clamps (53),
wherein the shield (49) has locking seats (52), on which the bar clamps (53) are mounted in a displaceable manner,
and wherein the bar clamps (53) can be prevented from falling out by means of caps (54) which form a blockade and which are each concealed in a connection chamber (113, 114, 115) of the base part (34).

## Revendications

1. Sectionneur de sécurité, comprenant une partie inférieure (1) complète avec un boîtier (2) posé au niveau de celle-ci et un couvercle (3) complet,
dans lequel la partie inférieure (1) présente une partie de base (34) et un module à rail (48) avec au moins un crampon de rail (53), qui sert au montage au niveau d'un pont sur rails,
dans lequel le module à rail (48) a deux bras (126 ; 128) élastiques, qui présentent à leur tour respectivement une surface d'appui (129 ; 136), qui prend appui au niveau de parties de réception disposées au niveau de la partie de base (34) et qui fixe le module à rail (48) au niveau de la partie inférieure (1) complète,
**caractérisé en ce que**
- les parties de réception sont des quatrièmes broches (125), qui sont disposées au niveau d'une partie de raccordement (74) de la partie de base (34),
- le module à rail (48) présente des quatrièmes et sixièmes surfaces coulissantes (124 ; 137), qui se déplacent au cours du coulissement du module à rail (48) en direction d'une partie supérieure (71) de la partie de base (34) au niveau des quatrièmes broches (125) et qui plient les bras (126 ; 128) élastiques,
- le retrait et la rotation du module à rail (48) provoquent de manière simultanée la rotation de tous les crampons de rail (53), ce qui donne lieu à une modification de la direction de flux sortant.

2. Sectionneur de sécurité selon la revendication 1, **caractérisé en ce que** le module à rail (48) présente des troisièmes segments (133), qui permettent, conjointement avec les cinquièmes guidages (134) disposés dans une première partie inférieure (73) de la partie de base (34), l'introduction par glissement de cinquièmes taquets (132) d'un élément de masquage et de blocage (42), qui empêche le module à rail (48) de sortir par glissement de la partie inférieure (1) complète.

3. Sectionneur de sécurité selon la revendication 1, **caractérisé en ce que** le module à rail (48) présente des deuxièmes découpes (130), qui permettent, conjointement avec les quatrièmes guidages (131) disposés dans une première partie supérieure (71) de la partie de base (34), l'introduction par glissement des cinquièmes taquets (132) de l'élément de masquage et de blocage (42), lequel empêche le module à rail (48) de sortir par glissement de la partie inférieure (1) complète.

4. Sectionneur de sécurité selon la revendication 1, **caractérisé en ce que** le premier et le deuxième bras (126 ; 128) élastique présentent des quatrièmes et cinquièmes surfaces coulissantes (124; 135), qui plient les bras (126; 128) élastiques du module à rail (48) **en ce qu'**ils se déplacent au niveau des quatrièmes broches (125) disposées au niveau de la partie de raccordement (74) de la partie de base (34).

5. Sectionneur de sécurité selon la revendication 1, **caractérisé en ce que** le module à rail (48) présente un premier et un deuxième renfoncement (117 ; 118), qui se plient lors de l'enfoncement des premier et deuxième bras (126 ; 128) élastiques, moyennant quoi la cinquième et à la sixième surface d'appui (129 ; 136) se déplacent derrière les quatrièmes broches (125) et débloquent le module à rail (48) et permettent le coulissement et le retrait du module à rail (48) hors de la partie inférieure (1) complète.

6. Sectionneur de sécurité selon la revendication 5, **caractérisé en ce que** le deuxième renfoncement (118) se trouvant au niveau des premiers bras (126) élastiques du module à rail (48) parvient, au cours du coulissement du module à rail (48) en direction de la partie supérieure (71) de la partie de base (34), sous un élément de masquage (47), moyennant quoi une information inscrite telle que « PUSH » peut être dissimulée.

7. Sectionneur de sécurité selon l'une quelconque des revendications précédentes, **caractérisé en ce que** le module à rail (48) présente un blindage de protection (49) des crampons de rail (53),
dans lequel le blindage de protection (49) a des sièges de fusible (52), au niveau desquels les crampons de rail (53) sont montés de manière à pouvoir coulisser,
et dans lequel la chute des crampons de rail (53) des capuchons (54), qui forment un blocage et qui se dissimulent respectivement dans un compartiment de raccordement (113, 114, 115) de la partie de base (34), peut être empêchée.
